# EUROPÄISCHE PATENTSCHRIFT

(11) **EP 3 758 963 B1**
(45) Veröffentlichungstag und Bekanntmachung des Hinweises auf die Patenterteilung: **10.04.2024**
(21) Anmeldenummer: 19707315.8
(22) Anmeldetag: 18.02.2019
(51) Int. Cl.: B60H 1/34, F24F 13/14

(54) **LÜFTUNGSAUSSTRÖMER**
AIR VENT
BOUCHE D'AÉRATION

(30) Priorität: 01.03.2018 DE 102018203081
(43) Veröffentlichungstag der Anmeldung: 06.01.2021
(73) Patentinhaber: Volkswagen Aktiengesellschaft, 38440 Wolfsburg (DE)
(72) Erfinder: BÖTTCHER, Eike, 38108 Braunschweig (DE); HEINEMANN, Olaf, 29378 Wittingen (DE)
(86) Internationale Anmeldenummer: PCT/EP2019/053980
(87) Internationale Veröffentlichungsnummer: WO 2019/166261

(56) Entgegenhaltungen:
- EP-A1- 3 321 113
- DE-A1-102012 015 748
- DE-A1-102015 120 290
- JP-A- 2013 086 633
- US-A1- 2006 223 430

## Beschreibung

Die vorliegende Erfindung betrifft einen Lüftungsausströmer für ein Lüftungssystem eines Kraftfahrzeugs zum gerichteten Anströmen einer Fahrgastzelle des Kraftfahrzeugs mit einem in eine Strömungsrichtung strömenden Luftstrom. Ferner betrifft die Erfindung ein Lüftungssystem zum Belüften einer Fahrgastzelle eines Kraftfahrzeugs sowie ein Kraftfahrzeug mit einem Lüftungssystem.

Zum gezielten Lenken eines Luftstroms zum gerichteten Anströmen einer Fahrgastzelle weisen Lüftungssysteme für Kraftfahrzeuge Lüftungsausströmer auf. Es sind viele unterschiedliche Lüftungsausströmer für Lüftungssysteme bekannt, die sich in ihrem Grundprinzip, ihren Aufgaben und ihren Funktionen unterscheiden. Es gibt beispielsweise Lüftungsausströmer, die starre Luftleitlamellen aufweisen, über welche der Luftstrom in eine konstante Richtung leitbar ist. Derartige Lüftungsausströmer kommen beispielsweise zum Anströmen von Fensterscheiben des Kraftfahrzeugs zum Einsatz, da eine relative Lage von Fensterscheibe zum Lüftungsausströmer konstant ist und somit eine variable Umlenkung des Luftstroms nicht erforderlich ist. Andere Lüftungsausströmer, die insbesondere zum Lenken des Luftstroms in Richtung der Insassen des Kraftfahrzeugs vorgesehen sind - sogenannte Personenausströmer-, weisen eine verstellbare Ablenkvorrichtung zum variablen Ablenken des Luftstroms auf. Eine solche Ablenkvorrichtung kann beispielsweise verstellbare bzw. verschwenkbare Lamellen aufweisen.

Aus der DE 10 2004 062 935 B4 ist beispielsweise ein Lüftungsausströmer für ein Lüftungssystem eines Kraftfahrzeugs bekannt, bei welchem mehrere Luftleitlamellen zum synchronen Verschwenken miteinander mechanisch gekoppelt sind. Über eine an einer Luftleitlamelle angeordnete Bedienungshandhabe ist die Luftleitlamelle verschwenkbar. Ein derartiger Lüftungsausströmer hat den Nachteil, dass ein ungewolltes Verstellen der Luftleitlamellen durch unbeabsichtigten Kontakt eines Insassen des Kraftfahrzeugs mit einer Luftleitlamelle leicht möglich ist. Aus den DE 10 2012 015 748 A1, JP 2013 086633 A,

DE 10 2015 120 290 A1 und US 2006/223430 A1 sind weitere unterschiedliche Lüftungsvorrichtungen bekannt. Die EP 3 321 113 A1, die nach dem beanspruchten Prioritätsdatum der vorliegenden Erfindung veröffentlicht worden und für die Frage der erfinderischen Tätigkeit nicht von Bedeutung ist, offenbart ein Luftausströmer, der einen Luftkanal aufweist, in dem mindestens eine erste Lamelle verschwenkbar angeordnet ist, wobei der Luftkanal eine Luftaustrittsöffnung aufweist, und parallel zu der mindestens einen ersten Lamelle an den gegenüberliegenden Seiten des Luftkanals jeweils mindestens ein Ablenkelement angeordnet ist.

Es ist Aufgabe der vorliegenden Erfindung, die voranstehend beschriebenen Nachteile bei einem Lüftungsausströmer für ein Lüftungssystem eines Kraftfahrzeugs, einem Lüftungssystem zum Belüften einer Fahrgastzelle eines Kraftfahrzeugs sowie einem Kraftfahrzeug mit einem Lüftungssystem zu beheben oder zumindest teilweise zu beheben. Insbesondere ist es Aufgabe der vorliegenden Erfindung, einen Lüftungsausströmer für ein Lüftungssystem eines Kraftfahrzeugs, ein Lüftungssystem zum Belüften einer Fahrgastzelle eines Kraftfahrzeugs sowie ein Kraftfahrzeug zu schaffen, die auf eine einfache und kostengünstige Art und Weise das gerichtete Anströmen der Fahrgastzelle des Kraftfahrzeugs mit einem in eine Strömungsrichtung strömenden Luftstrom gewährleisten können.

Voranstehende Aufgabe wird durch einen Lüftungsausströmer für ein Lüftungssystem eines Kraftfahrzeugs zum gerichteten Anströmen einer Fahrgastzelle des Kraftfahrzeugs mit einem in eine Strömungsrichtung strömenden Luftstrom mit den Merkmalen des unabhängigen Anspruchs 1, durch ein Lüftungssystem zum Belüften einer Fahrgastzelle eines Kraftfahrzeugs mit den Merkmalen des abhängigen Anspruchs 6 sowie durch ein Kraftfahrzeug mit den Merkmalen des abhängigen Anspruchs 7 gelöst. Vorteilhafte Ausgestaltungen der Erfindung ergeben sich aus den Unteransprüchen. Dabei gelten Merkmale und Details, die im Zusammenhang mit dem erfindungsgemäßen Lüftungsausströmer beschrieben sind, selbstverständlich auch im Zusammenhang mit dem erfindungsgemäßen Lüftungssystem sowie mit dem erfindungsgemäßen Kraftfahrzeug.

Gemäß einem ersten Aspekt der Erfindung wird die Aufgabe durch einen Lüftungsausströmer für ein Lüftungssystem eines Kraftfahrzeugs zum gerichteten Anströmen einer Fahrgastzelle des Kraftfahrzeugs mit einem in eine Strömungsrichtung strömenden Luftstrom mit den Merkmalen des unabhängigen Anspruchs 1 gelöst. Der Lüftungsausströmer weist ein Gehäuse, eine Blendenvorrichtung sowie eine erste Luftleitlamelle auf. Die Blendenvorrichtung weist einen ersten Blendenabschnitt und einen zweiten Blendenabschnitt auf, wobei zwischen dem ersten Blendenabschnitt und dem zweiten Blendenabschnitt ein schlitzförmiger Luftspalt ausgebildet ist. Die erste Luftleitlamelle weist ein in Strömungsrichtung erstes vorderes Lamellenende und ein erstes hinteres Lamellenende auf, wobei die erste Luftleitlamelle um eine erste Verschwenkachse verschwenkbar relativ zur Blendenvorrichtung gehalten ist. Eine Lamellenbreite der ersten Luftleitlamelle erstreckt sich parallel zum Luftspalt. Erfindungsgemäß ist die erste Luftleitlamelle in Strömungsrichtung fluchtend vor dem ersten Blendenabschnitt angeordnet. Am ersten vorderen Lamellenende ist eine erste Abschirmlamelle angeordnet, welche sich in eine vom Luftspalt abgewandte Richtung erstreckt und zum Abschirmen einer dem Luftspalt abgewandten Lamellenseite der ersten Luftleitlamelle vom Luftstrom ausgebildet ist. Die erste Abschirmlamelle ist gekrümmt ausgebildet, wobei ein Krümmungsradius der Krümmung der ersten Abschirmlamelle durch die erste Verschwenkachse definiert ist. Der Lüftungsausströmer weist ferner eine zweite Luftleitlamelle mit einem in Strömungsrichtung zweiten vorderen Lamellenende und einem zweiten hinteren Lamellenende auf, wobei die zweite Luftleitlamelle um eine zweite Verschwenkachse verschwenkbar relativ zur Blendenvorrichtung gehalten ist. Eine Lamellenbreite der zweiten Luftleitlamelle erstreckt sich parallel zum Luftspalt. Die zweite Luftleitlamelle ist in Strömungsrichtung fluchtend vor dem zweiten Blendenabschnitt angeordnet. Überdies sind die erste Luftleitlamelle und die zweite Luftleitlamelle derart miteinander mechanisch gekoppelt, dass ein Verschwenken der ersten Luftleitlamelle ein Verschwenken der zweiten Luftleitlamelle bewirkt.

Ein Lüftungssystem eines Kraftfahrzeugs ist eine Vorrichtung zum Bereitstellen mindestens eines Luftstroms in der Fahrgastzelle des Kraftfahrzeugs. Das Lüftungssystem weist üblicherweise eine Gebläsevorrichtung zum Erzeugen eines Luftstroms in einem Lüftungskanal des Lüftungssystems auf. Der Lüftungsausströmer ist an einer Schnittstelle des Lüftungssystems zur Fahrgastzelle an einem freien Ende des Lüftungskanals anordenbar, um den aus dem Lüftungskanal strömenden Luftstrom zum gerichteten Anströmen der Fahrgastzelle zu lenken.

Das Gehäuse des Lüftungsausströmers ist vorzugsweise an dem freien Ende des Lüftungskanals, insbesondere abdichtend, anordenbar. Es kann auch vorgesehen sein, dass das Gehäuse als Lüftungskanal oder zumindest als Lüftungskanalsegment ausgebildet ist. Vorzugsweise ist die erste Luftleitlamelle - und/oder eine etwaig vorhandene zweite Luftleitlamelle - am Gehäuse schwenkbar gehalten. Das Gehäuse kann im Rahmen der Erfindung auch ganz oder teilweise durch die Blendenvorrichtung gebildet sein.

Unter einer Strömungsrichtung wird eine Richtung verstanden, in welche der Luftstrom strömt. Im Inneren des Lüftungskanals folgt die Strömungsrichtung einem Verlauf des Lüftungskanals. Durch den Lüftungsausströmer ist die Strömungsrichtung des Luftstroms gezielt veränderbar, sodass dieser unter einem bestimmbaren variablen Winkel den Lüftungsausströmer verlässt und in die Fahrgastzelle eintritt.

Die Blendenvorrichtung weist den ersten Blendenabschnitt und den zweiten Blendenabschnitt auf. Durch den ersten Blendenabschnitt und den zweiten Blendenabschnitt ist der Luftspalt festgelegt, durch welchen der Luftstrom strömbar ist. Die Blendenvorrichtung ist vorzugsweise als Passivbauteil ausgebildet und weist somit keine beweglichen, insbesondere keine verschwenkbaren, Bauelemente auf. Ein variables Umlenken des Luftstroms in unterschiedliche Richtungen ist mittels der Blendenvorrichtung vorzugsweise nicht möglich. Die Blendenvorrichtung ist vorzugsweise derart ausgebildet, einen Luftspalt mit einem rechteckigen Querschnitt zu definieren, wobei der Querschnitt vorzugsweise eine Querschnittsbreite aufweist, welche mindestens doppelt so groß, vorzugsweise mindestens dreimal so groß, und besonders bevorzugt mindestens viermal so groß, wie eine Querschnittshöhe des Querschnitts ausgebildet ist. Demnach weist der Luftspalt vorzugsweise eine im Wesentlichen horizontale Erstreckung auf. Auf dem Luftspalt abgewandten Seiten weist die Blendenvorrichtung vorzugsweise einen Anbindungsabschnitt zum Anbinden des Lüftungsausströmers an eine Instrumententafel, eine Mittelkonsole, einen Dachhimmel, eine Tür- oder Seitenverkleidung, eine Säulenverkleidung oder dergleichen auf.

Die erste Luftleitlamelle ist vorzugsweise plattenförmig mit einer Lamellenbreite, einer Lamellendicke sowie einer Lamellentiefe ausgebildet. Die Lamellenbreite und die Lamellentiefe sind dabei vorzugsweise wesentlich größer als die Lamellendicke. Vorzugsweise beträgt die Lamellentiefe mindestens das Dreifache, vorzugsweise mindestens das Vierfache, der Lamellendicke. Die Lamellentiefe ist durch das erste vordere Lamellenende und das erste hintere Lamellenende begrenzt. Das erste vordere Lamellenende weist von der Blendenvorrichtung weg, der Strömungsrichtung entgegen. Das erste vordere Lamellenende ist als freies Ende der Luftleitlamelle ausgebildet. Das erste hintere Lamellenende ist dem ersten Blendenabschnitt zugewandt sowie dieser benachbart angeordnet oder an den ersten Blendenabschnitt angebunden. Am ersten hinteren Lamellenende weist die erste Luftleitlamelle eine erste Verschwenkachse auf, um welche die erste Luftleitlamelle relativ zur Blendenvorrichtung verschwenkbar ist. Die erste Verschwenkachse ist vorzugsweise parallel zur Querschnittsbreite des Luftspalts angeordnet. Vorzugsweise entspricht die Lamellenbreite der Querschnittsbreite des Luftspalts zumindest im Wesentlichen, sodass der durch den Luftspalt strömende Luftstrom möglichst effektiv lenkbar ist. Die erste Luftleitlamelle weist vorzugsweise ein Metall und/oder einen Kunststoff, vorzugsweise mit Verstärkungsfasern, insbesondere mit Glasfasern, Kohlefasern und/oder Aramidfasern, auf. Eine bevorzugte Lamellenbreite der ersten Luftleitlamelle beträgt etwa 200 mm bei einer Querschnittsbreite des Luftspalts von ebenfalls etwa 200 mm. Weiter bevorzugt ist die erste Luftleitlamelle mit einer Federvorrichtung derart gekoppelt, dass ein unbeabsichtigtes Verstellen der ersten Luftleitlamelle aufgrund einer Strömungsstärke des Luftstroms verhindert wird. Zudem ist die Federvorrichtung vorzugsweise derart ausgebildet und angeordnet, dass eine ungewollte Verstellung der ersten Luftleitlamelle, insbesondere bei Stößen, wie z. B. aufgrund von Bodenwellen oder einem rauen Fahrbahnbelag, mittels der Federvorrichtung verhinderbar ist. Dies ist insbesondere von Vorteil, wenn die erste Luftleitlamelle aus einer stabilen Gleichgewichtslage ausgelenkt ist und daher bereits eine Rückstellkraft in Richtung der stabilen Gleichgewichtslage auf die erste Luftleitlamelle wirkt. Die Federvorrichtung wirkt daher vorzugsweise einer solchen Rückstellkraft entgegen.

Erfindungsgemäß ist die erste Luftleitlamelle in Strömungsrichtung vor dem ersten Blendenabschnitt angeordnet, sodass ein in Strömungsrichtung strömender Luftstrom zuerst die erste Luftleitlamelle und nach der ersten Luftleitlamelle den ersten Blendenabschnitt anströmt. Unter einer fluchtenden Anordnung wird im Rahmen der Erfindung verstanden, dass die erste Luftleitlamelle den ersten Blendenabschnitt zumindest teilweise derart abschirmt, dass hierdurch ein direktes Anströmen des ersten Blendenabschnitts durch den Luftstrom verhinderbar bzw. zumindest teilweise verhinderbar ist.

Die erste Luftleitlamelle ist beispielsweise als Horizontallamelle ausgebildet. Eine Horizontallamelle ist im eingebauten Zustand des Lüftungsausströmers etwa parallel zum Fahrzeugboden des Kraftfahrzeugs angeordnet. Zudem kann der erfindungsgemäße Lüftungsausströmer mindestens eine Vertikallamelle aufweisen, welche in Strömungsrichtung vor der ersten Luftleitlamelle angeordnet ist. Zum Erzielen einer besonders genauen Ablenkbarkeit des Luftstroms ist die mindestens eine Vertikallamelle vorzugsweise besonders nah, insbesondere so nah wie technisch möglich, in Strömungsrichtung vor der ersten Luftleitlamelle angeordnet, ohne dabei eine Funktionalität der mindestens einen Vertikallamelle bzw. der ersten Luftleitlamelle zu beschränken. Die mindestens eine Vertikallamelle ist um eine vertikale Verschwenkachse verschwenkbar und zum Leiten des Luftstroms in unterschiedliche horizontale Richtungen ausgebildet. Ferner ist es bevorzugt, dass die mindestens eine Vertikallamelle ausgebildet ist, den Lüftungskanal zu verschließen, beispielsweise durch ein Querstellen relativ zum Luftstrom. Besonders bevorzugt ist das Verschließen des Lüftungskanals im Zusammenspiel mit mindestens einer weiteren Vertikallamelle vorgesehen. Auf diese Weise ist eine Größe des Luftmassenstroms mittels der mindestens einen Vertikallamelle regulierbar bzw. veränderbar. Die Vertikallamelle weist eine bevorzugte Lamellenbreite von etwa 40 mm oder von zumindest etwa einem Fünftel einer Lamellenbreite der ersten Luftleitlamelle auf. Zudem weist die Vertikallamelle vorzugsweise einen Kunststoff auf.

Am ersten vorderen Lamellenende ist die erste Abschirmlamelle angeordnet, welche sich in die vom Luftspalt abgewandte Richtung erstreckt und zum Abschirmen der dem Luftspalt abgewandten Lamellenseite der ersten Luftleitlamelle vom Luftstrom ausgebildet ist. Zusätzlich kann erfindungsgemäß vorgesehen sein, dass am zweiten vorderen Lamellenende eine zweite Abschirmlamelle angeordnet ist, welche sich in die vom Luftspalt abgewandte Richtung erstreckt und zum Abschirmen der dem Luftspalt abgewandten Lamellenseite der zweiten Luftleitlamelle vom Luftstrom ausgebildet ist. Mittels der ersten Abschirmlamelle ist ein Bereich zwischen dem ersten vorderen Lamellenende und dem Lüftungskanal abdeckbar. Die erste Abschirmlamelle ist vorzugsweise derart ausgebildet, dass der Bereich auch beim Verstellen der ersten Luftleitlamelle abgeschirmt wird. Die erste Abschirmlamelle ist gekrümmt ausgebildet. Der Krümmungsradius der Krümmung der ersten Abschirmlamelle ist durch die erste Verschwenkachse definiert. Die zweite Abschirmlamelle ist vorzugsweise entsprechend der ersten Abschirmlamelle ausgebildet. Eine derartige erste Abschirmlamelle bzw. zweite Abschirmlamelle hat den Vorteil, dass der Luftstrom auch bei ungünstigen Stellungen der Luftleitlamellen besser zum Luftspalt hin ablenkbar und das Entstehen von Turbulenzen im Bereich der Blendenabschnitte reduzierbar ist. Ein weiterer positiver Effekt ist eine reduzierte Geräuschemission.

Ferner weist der Lüftungsausströmer eine zweite Luftleitlamelle mit einem in Strömungsrichtung zweiten vorderen Lamellenende und einem zweiten hinteren Lamellenende auf, wobei die zweite Luftleitlamelle um eine zweite Verschwenkachse verschwenkbar relativ zur Blendenvorrichtung gehalten ist. Eine Lamellenbreite der zweiten Luftleitlamelle erstreckt sich parallel zum Luftspalt. Die zweite Luftleitlamelle ist in Strömungsrichtung fluchtend vor dem zweiten Blendenabschnitt angeordnet. Die zweite Luftleitlamelle ist vorzugsweise gemäß der ersten Luftleitlamelle ausgebildet. Vorzugsweise ist die erste Luftleitlamelle als untere Luftleitlamelle, welche einen unteren Bereich des Luftspaltquerschnitts begrenzt, und die zweite Luftleitlamelle als obere Luftleitlamelle ausgebildet, welche einen oberen Bereich des Luftspaltquerschnitts begrenzt. Es kann noch mindestens eine zentrale, insbesondere verschwenkbare, Luftleitlamelle vorgesehen sein, welche innerhalb des Luftspaltquerschnitts angeordnet ist. Die zweite Verschwenkachse verläuft vorzugsweise parallel zum Luftspalt, insbesondere horizontal. Die zweite Luftleitlamelle weist vorzugsweise einen Kunststoff, bevorzugt mit Verstärkungsfasern, insbesondere Glasfasern, Kohlefasern und/oder Aramidfasern, und/oder ein Metall auf. Eine bevorzugte Lamellenbreite der zweiten Luftleitlamelle entspricht vorzugsweise der Lamellenbreite der ersten Luftleitlamelle. Eine zweite Luftleitlamelle hat den Vorteil, dass mit einfachen Mitteln sowie kostengünstig eine bessere Umlenkung des Luftstroms bewirkbar ist. Ferner kann somit ein direktes Anströmen des zweiten Blendenabschnitts verhindert werden.

Die erste Luftleitlamelle und die zweite Luftleitlamelle sind derart miteinander mechanisch gekoppelt, dass ein Verschwenken der ersten Luftleitlamelle ein Verschwenken der zweiten Luftleitlamelle bewirkt. Hierfür sind die erste Luftleitlamelle und die zweite Luftleitlamelle beispielsweise mittels einer Koppelvorrichtung, wie z. B. einer Koppelstange, miteinander verbunden. Die Koppelvorrichtung ist vorzugsweise an einer Seite des Luftkanals angeordnet, um ein Stören des Luftstroms zu vermeiden. Eine derartige mechanische Kopplung hat den Vorteil, dass ein Einstellen der gewünschten Strömungsrichtung des Luftstroms, welche dieser nach Verlassen des Lüftungsausströmers aufweisen soll, mit einfachen Mitteln sowie kostengünstig verbessert ist.

Ein erfindungsgemäßer Lüftungsausströmer hat gegenüber herkömmlichen Lüftungsausströmern den Vorteil, dass mit einfachen Mitteln sowie auf eine kostengünstige Art und Weise ein aus dem Lüftungskanal strömender Luftstrom ablenkbar ist, wobei die beweglichen Teile des Lüftungsausströmers, insbesondere die erste Luftleitlamelle, von der Fahrgastzelle aus betrachtet hinter der Blendenvorrichtung angeordnet und somit vor äußeren Einflüssen geschützt ist. Die Gefahr eines unbeabsichtigten Verstellens der Luftleitlamellen ist somit gegenüber herkömmlichen Lüftungsausströmern erheblich reduziert.

Gemäß einer bevorzugten Weiterentwicklung der Erfindung kann bei einem Lüftungsausströmer vorgesehen sein, dass die erste Luftleitlamelle derart an dem ersten Blendenabschnitt angeordnet ist, dass mindestens 50% einer Lamellendicke der ersten Luftleitlamelle am ersten hinteren Lamellenende vom ersten Blendenabschnitt verdeckt ist. Mit anderen Worten ist das erste Lamellenende der ersten Luftleitlamelle derart an der Blendenvorrichtung angeordnet, dass von der Fahrgastzelle aus betrachtet maximal 50% der Lamellendicke der ersten Luftleitlamelle am ersten hinteren Lamellenende erkennbar sind und der Rest des ersten hinteren Lamellenendes von dem ersten Blendenabschnitt verdeckt ist. Vorzugsweise verdeckt der erste Blendenabschnitt einen größeren Teil der Lamellendicke der zweiten Luftleitlamelle. Ein derartiges Verdecken hat den Vorteil, dass die erste Luftleitlamelle mittels der Blendenvorrichtung gegenüber der Fahrgastzelle besser vor äußeren Einflüssen geschützt ist.

Es ist erfindungsgemäß bevorzugt, dass die erste Luftleitlamelle derart an dem ersten Blendenabschnitt angeordnet ist, dass das erste hintere Lamellenende vom ersten Blendenabschnitt zumindest abschnittsweise entlang der ersten Verschwenkachse vollständig verdeckt ist. Weiter bevorzugt ist das erste hintere Lamellenende komplett vom ersten Blendenabschnitt verdeckt. Dabei ist das erste hintere Lamellenende vorzugsweise derart am ersten Blendenabschnitt angeordnet, dass der erste Blendenabschnitt kein Hindernis für den Luftstrom darstellt, sodass ein laminarer Luftstrom begünstigt bzw. ein Abreißen eines laminaren Luftstroms verhindert wird. Ein derartiges Verdecken hat den Vorteil, dass die erste Luftleitlamelle mittels der Blendenvorrichtung gegenüber der Fahrgastzelle besser vor äußeren Einflüssen geschützt ist.

In einer besonders bevorzugten Ausgestaltung der Erfindung kann bei einem Lüftungsausströmer vorgesehen sein, dass die zweite Luftleitlamelle derart an dem zweiten Blendenabschnitt angeordnet ist, dass mindestens 50% einer Lamellendicke der zweiten Luftleitlamelle am zweiten hinteren Lamellenende vom zweiten Blendenabschnitt verdeckt ist. Mit anderen Worten ist das zweite Lamellenende der zweiten Luftleitlamelle derart an der Blendenvorrichtung angeordnet, dass von der Fahrgastzelle aus betrachtet maximal 50% der Lamellendicke der zweiten Luftleitlamelle am zweiten hinteren Lamellenende erkennbar sind und der Rest des zweiten hinteren Lamellenendes von dem zweiten Blendenabschnitt verdeckt ist. Vorzugsweise verdeckt der zweite Blendenabschnitt einen größeren Teil der Lamellendicke der zweiten Luftleitlamelle. Ein derartiges Verdecken hat den Vorteil, dass die zweite Luftleitlamelle mittels der Blendenvorrichtung gegenüber der Fahrgastzelle besser vor äußeren Einflüssen geschützt ist.

Weiter bevorzugt ist die zweite Luftleitlamelle derart an dem zweiten Blendenabschnitt angeordnet, dass das zweite hintere Lamellenende vom zweiten Blendenabschnitt zumindest abschnittsweise entlang der zweiten Verschwenkachse vollständig verdeckt ist. Weiter bevorzugt ist das zweite hintere Lamellenende komplett vom zweiten Blendenabschnitt verdeckt. Dabei ist das zweite hintere Lamellenende vorzugsweise derart am zweiten Blendenabschnitt angeordnet, dass der zweite Blendenabschnitt kein Hindernis für den Luftstrom darstellt, sodass ein laminarer Luftstrom begünstigt bzw. ein Abreißen eines laminaren Luftstroms verhindert wird. Ein derartiges Verdecken hat den Vorteil, dass die zweite Luftleitlamelle mittels der Blendenvorrichtung gegenüber der Fahrgastzelle besser vor äußeren Einflüssen geschützt ist.

Gemäß einem zweiten Aspekt der Erfindung wird die Aufgabe durch ein Lüftungssystem zum Belüften einer Fahrgastzelle eines Kraftfahrzeugs mit den Merkmalen des abhängigen Anspruchs 6 gelöst. Das Lüftungssystem weist eine Gebläsevorrichtung zum Erzeugen eines in eine Strömungsrichtung strömenden Luftstroms, einen Lüftungskanal zum Leiten des Luftstroms und einen Lüftungsausströmer zum gerichteten Anströmen der Fahrgastzelle des Kraftfahrzeugs mit dem Luftstrom auf. Erfindungsgemäß ist der Lüftungsausströmer als erfindungsgemäßer Lüftungsausströmer ausgebildet.

Die Gebläsevorrichtung ist vorzugsweise gemäß einer herkömmlichen Gebläsevorrichtung mit einem Antriebsmotor und einem Lüfterlaufrad, beispielsweise als Axialventilator, Tangentialventilator oder dergleichen, ausgebildet. Der Lüftungskanal ist zur Weiterleitung des von der Gebläsevorrichtung erzeugten Luftstroms mit dieser fluidkommunizierend gekoppelt und weist in Strömungsrichtung ein vorderes Lüftungskanalende sowie ein hinteres Lüftungskanalende auf. Es kann vorgesehen sein, dass das Lüftungssystem eine Heizvorrichtung zum Erwärmen des Luftstroms und/oder eine Kühlvorrichtung zum Kühlen des Luftstroms aufweist. Der erfindungsgemäße Lüftungsausströmer ist am hinteren Lüftungskanalende des Lüftungskanals fluidkommunizierend angeordnet und vorzugsweise mit diesem abgedichtet, um ein seitliches Ausströmen am Gehäuse des Lüftungsausströmers vorbei zu verhindern. Die Blendenvorrichtung des Lüftungsausströmers ist dem Lüftungskanal abgewandt.

Bei dem beschriebenen Lüftungssystem ergeben sich sämtliche Vorteile, die bereits zu einem Lüftungsausströmer gemäß dem ersten Aspekt der Erfindung beschrieben worden sind. Demnach hat das erfindungsgemäße Lüftungssystem gegenüber herkömmlichen Lüftungssystemen den Vorteil, dass mit einfachen Mitteln sowie auf eine kostengünstige Art und Weise ein aus dem Lüftungskanal strömender Luftstrom ablenkbar ist, wobei die beweglichen Teile des Lüftungsausströmers, insbesondere die erste Luftleitlamelle, von der Fahrgastzelle aus betrachtet hinter der Blendenvorrichtung angeordnet und somit vor äußeren Einflüssen geschützt ist. Die Gefahr eines unbeabsichtigten Verstellens der Luftleitlamellen ist somit gegenüber herkömmlichen Lüftungssystemen erheblich reduziert.

Gemäß einem dritten Aspekt der Erfindung wird die Aufgabe durch ein Kraftfahrzeug mit einem Lüftungssystem mit den Merkmalen des abhängigen Anspruchs 7 gelöst. Erfindungsgemäß ist das Lüftungssystem gemäß einem erfindungsgemäßen Lüftungssystem ausgebildet.

Bei dem beschriebenen Kraftfahrzeug ergeben sich sämtliche Vorteile, die bereits zu einem Lüftungsausströmer gemäß dem ersten Aspekt der Erfindung sowie zu einem erfindungsgemäßen Lüftungssystem gemäß dem zweiten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise ein aus dem Lüftungskanal strömender Luftstrom ablenkbar ist, wobei die beweglichen Teile des Lüftungsausströmers, insbesondere die erste Luftleitlamelle, von der Fahrgastzelle aus betrachtet hinter der Blendenvorrichtung angeordnet und somit vor äußeren Einflüssen geschützt sind. Die Gefahr eines unbeabsichtigten Verstellens der Luftleitlamellen ist somit gegenüber herkömmlichen Kraftfahrzeugen erheblich reduziert.

Ein erfindungsgemäßer Lüftungsausströmer, ein erfindungsgemäßes Lüftungssystem sowie ein erfindungsgemäßes Kraftfahrzeug werden nachfolgend anhand von Zeichnungen näher erläutert. Es zeigen jeweils schematisch:
- Figur 1: in einer perspektivischen Ansicht eine bevorzugte Ausführungsform eines erfindungsgemäßen Lüftungsausströmers,
- Figur 2: in einer Schnittdarstellung den Lüftungsausströmer aus Figur 1,
- Figur 3: in einer perspektivischen Ansicht den Lüftungsausströmer aus Figur 1 mit einer ersten Luftleitlamellenstellung,
- Figur 4: in einer perspektivischen Ansicht den Lüftungsausströmer aus Figur 1 mit einer zweiten Luftleitlamellenstellung,
- Figur 5: in einer Seitenansicht eine bevorzugte Ausführungsform eines erfindungsgemäßen Lüftungssystems, und
- Figur 6: in einer Seitenansicht eine bevorzugte Ausführungsform eines erfindungsgemäßen Kraftfahrzeugs.

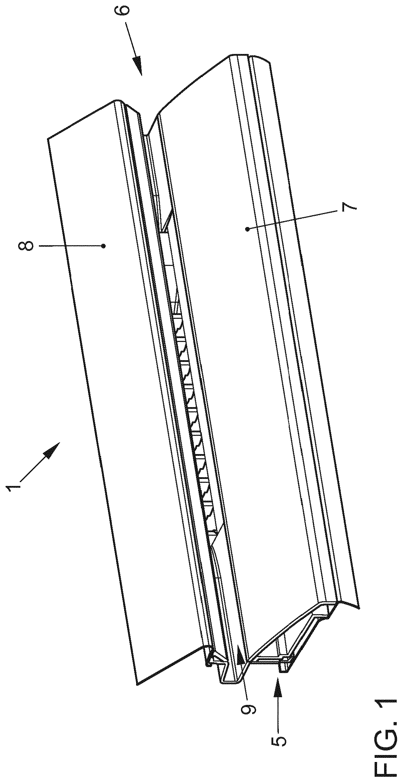

Elemente mit gleicher Funktion und Wirkungsweise sind in den Fig. 1 bis 6 jeweils mit denselben Bezugszeichen versehen.

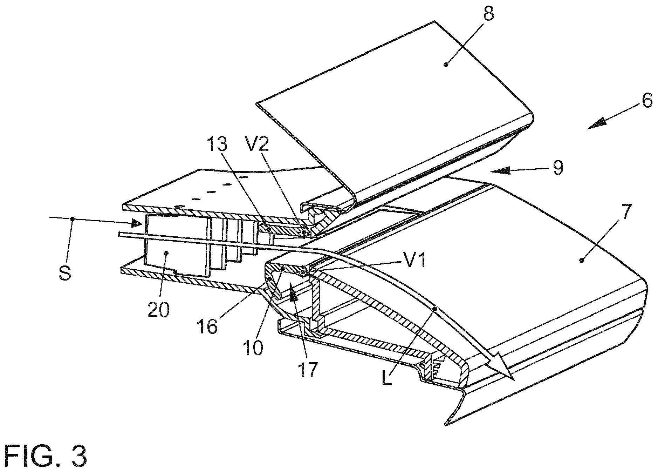

In Fig. 1 ist eine bevorzugte Ausführungsform eines erfindungsgemäßen Lüftungsausströmers 1 schematisch in einer perspektivischen Ansicht abgebildet. Der Lüftungsausströmer 1 weist ein Gehäuse 5 sowie eine Blendenvorrichtung 6 mit einem unteren ersten Blendenabschnitt 7 und einem oberen zweiten Blendenabschnitt 8 auf. Zwischen dem ersten Blendenabschnitt 7 und dem zweiten Blendenabschnitt 8 ist ein Luftspalt 9 zum Durchleiten eines Luftstroms L (vgl. Fig. 3) ausgebildet. Luftleitlamellen sind in dieser Ansicht nicht bzw. kaum erkennbar.

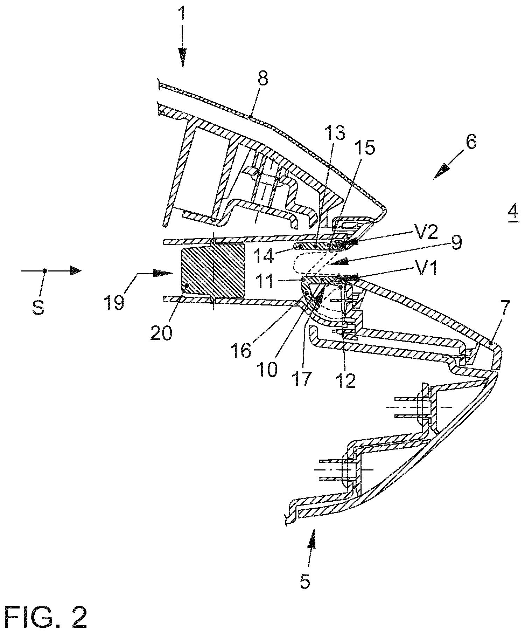

In Fig. 2 ist die bevorzugte Ausführungsform des erfindungsgemäßen Lüftungsausströmers 1 aus Fig. 1 schematisch in einer Schnittdarstellung abgebildet. In dieser Ansicht ist der zwischen dem ersten Blendenabschnitt 7 und dem zweiten Blendenabschnitt 8 der Blendenvorrichtung 6 ausgebildete Luftspalt 9 gut erkennbar. In Strömungsrichtung S vor dem ersten Blendenabschnitt 7 ist eine erste Luftleitlamelle 10 derart angeordnet, dass ein erstes hinteres Lamellenende 12 dem ersten Blendenabschnitt 7 zugewandt sowie diesem benachbart angeordnet ist. Ein erstes vorderes Lamellenende 11 der ersten Luftleitlamelle 10 weist von der Blendenvorrichtung 6 weg entgegen der Strömungsrichtung S. Ferner ist in Strömungsrichtung S vor dem, zweiten Blendenabschnitt 8 eine zweite Luftleitlamelle 13 derart angeordnet, dass ein zweites hinteres Lamellenende 15 dem zweiten Blendenabschnitt 8 zugewandt sowie diesem benachbart angeordnet ist. Ein zweites vorderes Lamellenende 14 der zweiten Luftleitlamelle 13 weist von der Blendenvorrichtung 6 weg entgegen der Strömungsrichtung S. Die erste Luftleitlamelle 10 ist am ersten hinteren Lamellenende 12 um eine erste Verschwenkachse V1 verschwenkbar relativ zur Blendenvorrichtung 6 gehalten. Die zweite Luftleitlamelle 13 ist am zweiten hinteren Lamellenende 15 um eine zweite Verschwenkachse V2 verschwenkbar relativ zur Blendenvorrichtung 6 gehalten. Am ersten vorderen Lamellenende 11 ist eine erste Abschirmlamelle 16 zum Abschirmen einer dem Luftspalt 9 abgewandten Lamellenseite 17 angeordnet. In Strömungsrichtung S vor der ersten Luftleitlamelle 10 und der zweiten Luftleitlamelle 13 ist eine Vertikallamelle 20 zum Umleiten des Luftstroms L (vgl. Fig. 3) in horizontale Richtung angeordnet. Ferner ist ein Endbereich eines Lüftungskanals 19 zum Durchleiten des Luftstroms L zum Lüftungsausströmer 1 und gegebenenfalls zu einem anschließenden Eintritt in eine Fahrgastzelle 4 schematisch abgebildet.

Fig. 3 zeigt die bevorzugte Ausführungsform des erfindungsgemäßen Lüftungsausströmers 1 aus Fig. 1 mit einer ersten Luftleitlamellenstellung schematisch in einer perspektivischen Ansicht. Die erste Luftleitlamelle 10 und die zweite Luftleitlamelle 13 sind in der ersten Lamellenstellung horizontal angeordnet, sodass der in Strömungsrichtung S strömende Luftstrom L aufgrund der geometrischen Ausbildung des Lüftungsausströmers 1 zum ersten Blendenabschnitt 7 abgelenkt wird. Mittels der ersten Abschirmlamelle 16 wird ein Anströmen der abgewandten Lamellenseite 17 der ersten Luftleitlamelle 10 durch den Luftstrom L verhindert.

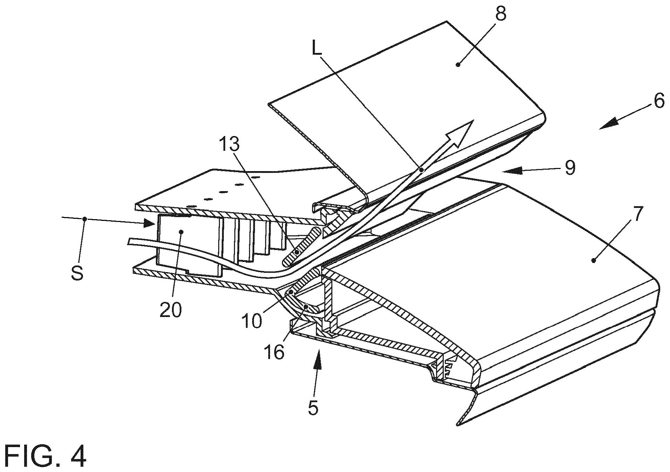

Fig. 4 zeigt die bevorzugte Ausführungsform des erfindungsgemäßen Lüftungsausströmers 1 aus Fig. 1 mit einer zweiten Luftleitlamellenstellung schematisch in einer perspektivischen Ansicht. Die erste Luftleitlamelle 10 und die zweite Luftleitlamelle 13 sind in der zweiten Lamellenstellung in Strömungsrichtung S nach oben angestellt, sodass der in Strömungsrichtung S strömende Luftstrom L zum zweiten Blendenabschnitt 8 abgelenkt wird. Die erste Abschirmlamelle 16 ist in einen Freiraum des Gehäuses 5 aufgenommen. Mittels der ersten Luftleitlamelle 10 wird ein Anströmen der abgewandten Lamellenseite 17 der ersten Luftleitlamelle 10 durch den Luftstrom L verhindert.

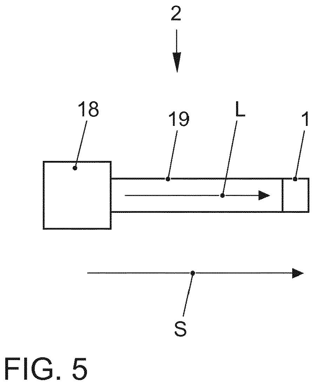

In Fig. 5 ist eine bevorzugte Ausführungsform eines erfindungsgemäßen Lüftungssystems 2 schematisch in einer Seitenansicht abgebildet. Das Lüftungssystem 2 weist eine Gebläsevorrichtung 18 zum Erzeugen eines Luftstroms L auf. An der Gebläsevorrichtung 18 ist ein Lüftungskanal 19 zum Durchleiten des Luftstroms L in Strömungsrichtung S fluidkommunizierend angeordnet. An einem von der Gebläsevorrichtung 18 entfernten Ende des Lüftungskanals 19 ist ein erfindungsgemäßer Lüftungsausströmer 1 zum Auslassen sowie zum Lenken des Luftstroms L angeordnet.

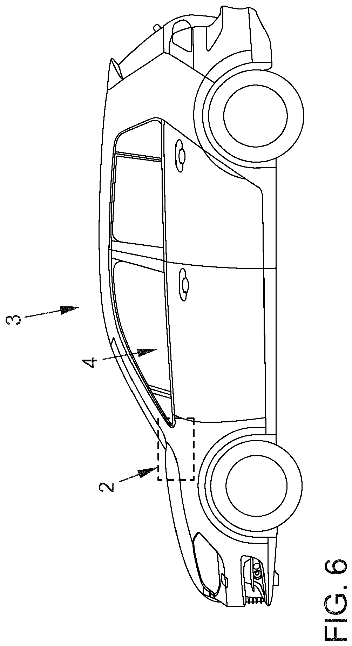

Fig. 6 zeigt eine bevorzugte Ausführungsform eines erfindungsgemäßen Kraftfahrzeugs 3 schematisch in einer Seitenansicht. Das Kraftfahrzeug 3 weist ein erfindungsgemäßes Lüftungssystem 2 zum Belüften einer Fahrgastzelle 4 des Kraftfahrzeugs 3 auf.

### Bezugszeichenliste

- 1: Lüftungsausströmer
- 2: Lüftungssystem
- 3: Kraftfahrzeug
- 4: Fahrgastzelle
- 5: Gehäuse
- 6: Blendenvorrichtung
- 7: erster Blendenabschnitt
- 8: zweiter Blendenabschnitt
- 9: Luftspalt
- 10: erste Luftleitlamelle
- 11: erstes vorderes Lamellenende
- 12: erstes hinteres Lamellenende
- 13: zweite Luftleitlamelle
- 14: zweites vorderes Lamellenende
- 15: zweites hinteres Lamellenende
- 16: erste Abschirmlamelle
- 17: abgewandte Lamellenseite
- 18: Gebläsevorrichtung
- 19: Lüftungskanal
- 20: Vertikallamelle

- L: Luftstrom
- S: Strömungsrichtung
- V1: erste Verschwenkachse
- V2: zweite Verschwenkachse

## Patentansprüche

1. Lüftungsausströmer (1) für ein Lüftungssystem (2) eines Kraftfahrzeugs (3) zum gerichteten Anströmen einer Fahrgastzelle (4) des Kraftfahrzeugs (3) mit einem in eine Strömungsrichtung (S) strömenden Luftstrom (L), aufweisend ein Gehäuse (5), eine Blendenvorrichtung (6) mit einem ersten Blendenabschnitt (7) und einem zweiten Blendenabschnitt (8), wobei zwischen dem ersten Blendenabschnitt (7) und dem zweiten Blendenabschnitt (8) ein schlitzförmiger Luftspalt (9) ausgebildet ist, eine erste Luftleitlamelle (10) mit einem in Strömungsrichtung (S) ersten vorderen Lamellenende (11) und einem ersten hinteren Lamellenende (12), wobei die erste Luftleitlamelle (10) um eine erste Verschwenkachse (V1) verschwenkbar relativ zur Blendenvorrichtung (6) gehalten ist, wobei sich eine Lamellenbreite der ersten Luftleitlamelle (10) parallel zum Luftspalt (9) erstreckt, wobei die erste Luftleitlamelle (10) in Strömungsrichtung (S) fluchtend vor dem ersten Blendenabschnitt (7) angeordnet ist, wobei der Lüftungsausströmer (1) eine zweite Luftleitlamelle (13) mit einem in Strömungsrichtung (S) zweiten vorderen Lamellenende (14) und einem zweiten hinteren Lamellenende (15) aufweist, wobei die zweite Luftleitlamelle (13) um eine zweite Verschwenkachse (V2) verschwenkbar relativ zur Blendenvorrichtung (6) gehalten ist, wobei sich eine Lamellenbreite der zweiten Luftleitlamelle (13) parallel zum Luftspalt (9) erstreckt, wobei die zweite Luftleitlamelle (13) in Strömungsrichtung (S) fluchtend vor dem zweiten Blendenabschnitt (8) angeordnet ist, und wobei die erste Luftleitlamelle (10) und die zweite Luftleitlamelle (13) derart miteinander mechanisch gekoppelt sind, dass ein Verschwenken der ersten Luftleitlamelle (10) ein Verschwenken der zweiten Luftleitlamelle (13) bewirkt, **dadurch gekennzeichnet, dass** am ersten vorderen Lamellenende (11) eine erste Abschirmlamelle (16) angeordnet ist, welche sich in eine vom Luftspalt (9) abgewandte Richtung erstreckt und zum Abschirmen einer dem Luftspalt (9) abgewandten Lamellenseite (17) der ersten Luftleitlamelle (10) vom Luftstrom (L) ausgebildet ist, wobei die erste Abschirmlamelle (16) gekrümmt ausgebildet ist, und wobei ein Krümmungsradius der Krümmung der ersten Abschirmlamelle (16) durch die erste Verschwenkachse (V1) definiert ist.

2. Lüftungsausströmer (1) nach dem vorangegangenen Anspruch,
**dadurch gekennzeichnet,**
**dass** die erste Luftleitlamelle (10) derart an dem ersten Blendenabschnitt (7) angeordnet ist, dass mindestens 50% einer Lamellendicke der ersten Luftleitlamelle (10) am ersten hinteren Lamellenende (12) vom ersten Blendenabschnitt (7) verdeckt ist.

3. Lüftungsausströmer (1) nach einem der vorangegangenen Ansprüche,
**dadurch gekennzeichnet,**
**dass** die erste Luftleitlamelle (10) derart an dem ersten Blendenabschnitt (7) angeordnet ist, dass das erste hintere Lamellenende (12) vom ersten Blendenabschnitt (7) zumindest abschnittsweise entlang der ersten Verschwenkachse (V1) vollständig verdeckt ist.

4. Lüftungsausströmer (1) nach einem der vorangegangenen Ansprüche,
**dadurch gekennzeichnet,**
**dass** die zweite Luftleitlamelle (13) derart an dem zweiten Blendenabschnitt (8) angeordnet ist, dass mindestens 50% einer Lamellendicke der zweiten Luftleitlamelle (13) am zweiten hinteren Lamellenende (15) vom zweiten Blendenabschnitt (8) verdeckt ist.

5. Lüftungsausströmer (1) nach einem der vorangegangenen Ansprüche,
**dadurch gekennzeichnet,**
**dass** die zweite Luftleitlamelle (13) derart an dem zweiten Blendenabschnitt (8) angeordnet ist, dass das zweite hintere Lamellenende (15) vom zweiten Blendenabschnitt (8) zumindest abschnittsweise entlang der zweiten Verschwenkachse (V2) vollständig verdeckt ist.

6. Lüftungssystem (2) zum Belüften einer Fahrgastzelle (4) eines Kraftfahrzeugs (3), aufweisend eine Gebläsevorrichtung (18) zum Erzeugen eines in eine Strömungsrichtung (S) strömenden Luftstroms (L), einen Lüftungskanal (19) zum Leiten des Luftstroms (L) und einen Lüftungsausströmer (1) zum gerichteten Anströmen der Fahrgastzelle (4) des Kraftfahrzeugs (3) mit dem Luftstrom (L),
**dadurch gekennzeichnet,**
**dass** der Lüftungsausströmer (1) nach einem der vorangegangenen Ansprüche ausgebildet ist.

7. Kraftfahrzeug (3), aufweisend ein Lüftungssystem (2),
**dadurch gekennzeichnet,**
**dass** das Lüftungssystem (2) gemäß einem Lüftungssystem (2) nach Anspruch 6 ausgebildet ist.

## Claims

1. Ventilation vent (1) for a ventilation system (2) of a motor vehicle (3) for directed air flow (L), which flows in a flow direction (S), to a passenger compartment (4) of the motor vehicle (3), the vent comprising a housing (5) and a panel device (6) having a first panel portion (7) and a second panel portion (8), a slot-shaped air gap (9) being formed between the first panel portion (7) and the second panel portion (8), and comprising a first air-guiding lamella (10) having a first front lamella end (11) in the flow direction (S) and a first rear lamella end (12), the first air-guiding lamella (10) being held about a first pivot axis (V1) so as to be pivotable relative to the panel device (6), a lamella width of the first air-guiding lamella (10) extending in parallel with the air gap (9), the first air-guiding lamella (10) being aligned in front of the first panel portion (7) in the flow direction (S), the ventilation vent (1) comprising a second air-guiding lamella (13) having a second front lamella end (14) in the flow direction (S) and a second rear lamella end (15), the second air-guiding lamella (13) being held about a second pivot axis (V2) so as to be pivotable relative to the panel device (6), a lamella width of the second air-guiding lamella (13) extending in parallel with the air gap (9), the second air-guiding lamella (13) being aligned in front of the second panel portion (8) in the flow direction (S), and the first air-guiding lamella (10) and the second air-guiding lamella (13) being mechanically coupled to one another such that pivoting of the first air-guiding lamella (10) causes pivoting of the second air-guiding lamella (13), **characterized in that** a first shielding lamella (16) is arranged on the first front lamella end (11), which first shielding lamella extends in a direction facing away from the air gap (9) and is designed to shield a lamella side (17) of the first air-guiding lamella (10) facing away from the air gap (9) from the air flow (L), the first shielding lamella (16) being curved, and a radius of curvature of the curvature of the first shielding lamella (16) being defined by the first pivot axis (V1).

2. Ventilation vent (1) according to the preceding claim,
**characterized in that**
the first air-guiding lamella (10) is arranged on the first panel portion (7) such that at least 50% of a lamella thickness of the first air-guiding lamella (10) is covered at the first rear lamella end (12) by the first panel portion (7).

3. Ventilation vent (1) according to either of the preceding claims,
**characterized in that**
the first air-guiding lamella (10) is arranged on the first panel portion (7) such that the first rear lamella end (12) is completely covered by the first panel portion (7) at least in portions along the first pivot axis (V1).

4. Ventilation vent (1) according to any of the preceding claims,
**characterized in that**
the second air-guiding lamella (13) is arranged on the second panel portion (8) such that at least 50% of a lamella thickness of the second air-guiding lamella (13) is covered at the second rear lamella end (15) by the second panel portion (8).

5. Ventilation vent (1) according to any of the preceding claims,
**characterized in that**
the second air-guiding lamella (13) is arranged on the second panel portion (8) such that the second rear lamella end (15) is completely covered by the second panel portion (8) at least in portions along the second pivot axis (V2).

6. Ventilation system (2) for ventilating a passenger compartment (4) of a motor vehicle (3), comprising a blower device (18) for generating an air flow (L) flowing in a flow direction (S), a ventilation channel (19) for guiding the air flow (L) and a ventilation vent (1) for directed air flow (L) to the passenger compartment (4) of the motor vehicle (3),
**characterized in that**
the ventilation vent (1) is designed according to any of the preceding claims.

7. Motor vehicle (3), comprising a ventilation system (2),
**characterized in that**
the ventilation system (2) is designed according to a ventilation system (2) according to claim 6.

## Revendications

1. Évent d'aération (1) pour un système d'aération (2) d'un véhicule automobile (3) pour le soufflage directionnel d'un habitacle (4) du véhicule automobile (3) avec un flux d'air (L) s'écoulant dans une direction d'écoulement (S), présentant un boîtier (5), un dispositif de diaphragme (6) comportant une première section de diaphragme (7) et une seconde section de diaphragme (8), dans lequel entre la première section de diaphragme (7) et la seconde section de diaphragme (8), un entrefer (9) en forme de fente est formé, une première lamelle de guidage d'air (10) avec une première extrémité de lamelle avant (11) dans la direction d'écoulement (S) et une première extrémité de lamelle arrière (12), dans lequel la première lamelle de guidage d'air (10) est maintenue de manière à pouvoir pivoter autour d'un premier axe de pivotement (V1) par rapport au dispositif de diaphragme (6), dans lequel une largeur de lamelle de la première lamelle de guidage d'air (10) s'étend parallèlement à l'entrefer (9), dans lequel la première lamelle de guidage d'air (10) est agencée en alignement dans la direction d'écoulement (S) devant la première section de diaphragme (7), dans lequel l'évent d'aération (1) présente une seconde lamelle de guidage d'air (13) avec une seconde extrémité de lamelle avant (14) dans la direction d'écoulement (S) et une seconde extrémité de lamelle arrière (15), dans lequel la seconde lamelle de guidage d'air (13) est maintenue de manière à pouvoir pivoter autour d'un second axe de pivotement (V2) par rapport au dispositif de diaphragme (6), dans lequel une largeur de lamelle de la seconde lamelle de guidage d'air (13) s'étend parallèlement à l'entrefer (9), dans lequel la seconde lamelle de guidage d'air (13) est agencée en alignement dans la direction d'écoulement (S) devant la seconde section de diaphragme (8) et dans lequel la première lamelle de guidage d'air (10) et la seconde lamelle de guidage d'air (13) sont couplées mécaniquement l'une à l'autre de telle sorte qu'un pivotement de la première lamelle de guidage d'air (10) entraîne un pivotement de la seconde lamelle de guidage d'air (13), **caractérisé en ce que** sur la première extrémité de lamelle avant (11) est agencée une première lamelle de protection (16), qui s'étend dans une direction opposée à l'entrefer (9) et est conçue pour protéger un côté de lamelle (17) de la première lamelle de guidage d'air (10) à l'opposé de l'entrefer (9) du flux d'air (L), dans lequel la première lamelle de protection (16) est conçue incurvée et dans lequel un rayon de courbure de la courbure de la première lamelle de protection (16) est défini par le premier axe de pivotement (V1).

2. Évent d'aération (1) selon la revendication précédente,
**caractérisé en ce**
**que** la première lamelle de guidage d'air (10) est agencée sur la première section de diaphragme (7) de telle sorte qu'au moins 50 % d'une épaisseur de lamelle de la première lamelle de guidage d'air (10) au niveau de la première extrémité de lamelle arrière (12) sont recouverts par la première section de diaphragme (7).

3. Évent d'aération (1) selon l'une des revendications précédentes,
**caractérisé en ce**
**que** la première lamelle de guidage d'air (10) est agencée sur la première section de diaphragme (7) de telle sorte que la première extrémité de lamelle arrière (12) est totalement recouverte par la première section de diaphragme (7) au moins par sections le long du premier axe de pivotement (V1).

4. Évent d'aération (1) selon l'une des revendications précédentes,
**caractérisé en ce**
**que** la seconde lamelle de guidage d'air (13) est agencée sur la seconde section de diaphragme (8) de telle sorte qu'au moins 50 % d'une épaisseur de lamelle de la seconde lamelle de guidage d'air (13) au niveau de la seconde extrémité de lamelle arrière (15) sont recouverts par la seconde section de diaphragme (8).

5. Évent d'aération (1) selon l'une des revendications précédentes,
**caractérisé en ce**
**que** la seconde lamelle de guidage d'air (13) est agencée sur la seconde section de diaphragme (8) de telle sorte que la seconde extrémité de lamelle arrière (15) est totalement recouverte par la seconde section de diaphragme (8) au moins par sections le long du second axe de pivotement (V2).

6. Système d'aération (2) pour la ventilation d'un habitacle (4) d'un véhicule automobile (3), présentant un dispositif de soufflage (18) pour la génération d'un flux d'air (L) s'écoulant dans une direction d'écoulement (S), un premier canal d'aération (19) pour le guidage du flux d'air (L) et un évent d'aération (1) pour le soufflage directionnel de l'habitacle (4) du véhicule automobile (3) avec le flux d'air (L),
**caractérisé en ce**
**que** l'évent d'aération (1) est conçu selon l'une des revendications précédentes.

7. Véhicule automobile (3), présentant un système d'aération (2),
**caractérisé en ce**
**que** le système d'aération (2) est conçu conformément à un système d'aération (2) selon la revendication 6.
